# EUROPEAN PATENT APPLICATION

(11) **EP 2 244 523 A1**
(43) Date of publication of application: **27.10.2010**
(21) Application number: 10160602.8
(22) Date of filing: 21.04.2010
(51) Int. Cl.: H04W 76/06

(54) **Methods and apparatus to suspend packet switched services**

(30) Priority: 21.04.2009 US 171429 P
(71) Applicant: RESEARCH IN MOTION LIMITED, Waterloo, Ontario N2L 3W8 (CA)
(72) Inventor: Ali, Syed, Hussain, Waterloo Ontario N2L 3W8 (CA); Wijayanathan, Maiyuran, Waterloo Ontario N2L 3W8 (CA); Naqvi, Noushad, Waterloo Ontario N2L 3W8 (CA)
(74) Representative: MERH-IP Matias Erny Reichl Hoffmann

(57) **Abstract**

Methods and apparatus to suspend packet switched services in a mobile network are disclosed. An example method includes sending from a user equipment (101) a session management status message (118) comprising a first indication indicating suspend packet data protocol context.

## Description

### RELATED APPLICATION

This patent claims priority from U.S. Provisional Application Serial No. 61/171,429, entitled "METHODS AND APPARATUS TO SUSPEND PACKET SWITCHED SERVICES" and filed on April 21, 2009. U.S. Provisional Application Serial No. 61/171,429 is hereby incorporated by reference in its entirety.

### FIELD OF THE DISCLOSURE

This disclosure relates generally to mobile communications and, more particularly, to methods and apparatus to suspend packet switched services for mobile communications.

### BACKGROUND

Mobile communications networks can provide simultaneous circuit switched (CS) and packet switched (PS) operation for mobile stations. For example, networks set forth in the Third Generation Partnership Project's (3GPP) specifications support simultaneous circuit switched (CS) and packet switched (PS) operation for a User Equipment (UE) in Universal Mobile Telecommunications System (UMTS) Terrestrial Radio Access Network (UTRAN) access. The UE can be attached to both the Packet Switched (PS) domain and Circuit Switched (CS) domain, and the UE is capable of simultaneously signaling with the PS and CS core network domains.

Although UTRAN mode support simultaneous CS and PS operation infrastructure vendors may have limitations on their Radio Network Controllers (RNC) that result in serial processing of UE operations. For example, when a UE is on a CS call (e.g., a voice call) and user data such as an incoming e-mail message arrives in the core network and when there is no PS Radio Access Bearer (PS RAB) configured, then the core network requests the RNC to initiate a PS RAB setup procedure with the UE. In the meantime, due to fading or other impairments in the radio channel, the UE might experience a bad channel and send a measurement report back to the RNC. In response to the measurement report, the RNC sets up a compressed mode of operation, which is accomplished through a Physical Channel reconfiguration procedure. Because the RNC processes UE requests in series and there is already an ongoing PS RAB setup procedure, the RNC will wait to setup compressed mode until the PS RAB procedure completes. This serial behavior may delay the start of compressed mode long enough that the UE drops the CS call in fast fading conditions.

### BRIEF DESCRIPTION OF THE DRAWINGS

FIG. 1 illustrates an example message flow between user equipment (UE) and a network to suspend PS services.

FIG. 2 illustrates an example message flow between UE and a network to resume PS services.

FIG. 3 is a flowchart of an example process that may be implemented by UE to suspend PS services.

FIG. 4 is a flowchart of an example process that may be implemented by UE to determine that PS services should be suspended.

FIG. 5 is a flowchart of an example process for resuming PS services.

FIG. 6 is a flowchart of an example process that may be implemented by a communications network to receive and process PS service suspend requests from UE.

FIG. 7 is a flowchart of an example process for resuming PDP contexts by a communication network.

FIG. 8 is a block diagram of a UMTS protocol stack.

FIG. 9 is an exemplary UE that can be implemented in accordance with this disclosure.

FIG. 10 is an exemplary network that may be implemented in accordance with this disclosure.

### DETAILED DESCRIPTION

The examples and embodiments provided below describe various example methods and systems to suspend packet switched services between a mobile device or User Equipment (UE) and a macro-cellular wireless network such as, for example, a UMTS network. It is to be understood that other implementations in other types of networks are also possible. For example, the same teachings could also be applied to a Code-Division-Multiple-Access (CDMA) network (e.g. 3GPP2 IS-2000), Wideband-CDMA (W-CDMA) network (e.g. 3GPP UMTS/High-Speed Packet Access (HSPA)) network or by way of generalization, to any network based on radio access technologies that utilize network-controlled radio resources. The specific examples and implementations described below although presented for simplicity in relation to UMTS networks are also applicable to other network environments.

Methods and apparatus to suspend and resume packet switched services for communications are disclosed. A first example technique to suspend packet switched services in a user equipment described herein involves sending a first session management status message comprising a first indication indicating suspend packet data protocol context. In some implementations, the first indication indicates that all packet data protocol contexts are to be suspended.

In some implementations, the first session management status includes a transaction identifier associated with a first packet data protocol context to be suspended. That first session management message may include a suspension indicator indicating that all active packet data protocol contexts sharing a packet data protocol address and an access point name with the first packet data protocol context shall be suspended. The first session management message may include a suspension indicator indicating that only the first packet data protocol context shall be suspended.

In some implementations of the first example technique, the first indication is a session management cause value. In some implementations the session management cause value is #113 Suspend PDP context. Some implementations include sending a second session management status message comprising a second indication indicating resume packet data protocol context. In some such implementations, the second indication indicates that all packet data protocol contexts are to be resumed. In some implementations, the second session management status message includes a transaction identifier identifying a packet data protocol context to be resumed. The second indication may be a session management cause value. The session management cause value may be #114 Resume PDP context.

In some implementations of the first technique, the first session management status message is sent when a circuit switch call is initiated. In some implementations, the first session management status message is sent when the user equipment determines that packet switched communications may interfere with circuit switched communications. In some implementations, the first session management message includes a first transaction identifier associated with a first packet data protocol context to be suspended and a second transaction identifier associated with a second packet data protocol context to be suspended.

A second example technique to suspend packet switched services at a mobile device described herein involves a mobile communication device determining that a circuit switched call has been established at the mobile device. The technique also involves, in response to determining that the circuit switched call has been established, generating a first session management status message including a transaction identifier identifying a packet data protocol context for the mobile device and including a cause value indicating that the packet data protocol context is to be suspended. The technique further involves transmitting the first session management status message to a communication network communicatively coupled to the mobile device. Furthermore, the technique may include, after transmitting the session management status message, detecting termination of the circuit switched call and in response to detecting the termination, generating a second session management status message including the transaction identifier identifying the packet data protocol context for the mobile device and including a cause value indicating that the packet data protocol context is to be resumed and transmitting the second session management status message to the communication network communicatively coupled to the mobile device.

Some implementations of the techniques described herein further include determining that a signal strength is below a threshold, wherein generating the first session management status message is performed in response to determining that the circuit switched call has been established and determining that a wireless signal strength is below a threshold. Additionally, in some implementations the transaction identifier identifies a list of packet data protocol contexts to be suspended. The example techniques described herein may further include, initiating buffering of packet switched data in a buffer at the mobile device in response to determining that the circuit switched call has been initiated.

When the technique includes the second session management status message, the technique may further include in response to determining that the circuit switched call has been initiated, initiating buffering of packet switched data in a buffer at the mobile device and, in response to detecting the termination, transmitting the contents of the buffer to the communication network.

In some implementations of the technique, the packet data protocol context may be a first packet data protocol context and the technique may further include determining that a second packet data protocol context exists, in response to determining that the circuit switched call has been initiated, generating a second session management status message including a transaction identifier identifying the second packet data protocol context for the mobile device and including the cause value indicating that the second packet data protocol context is to be suspended, and transmitting the second session management status message to the communication network communicatively coupled to the mobile device. According to example techniques, the circuit switched call originated with the mobile device. While in other techniques, the circuit switched call did not originate with the mobile device.

A third technique for suspending packet switched services involves receiving a first session management status message at a service general packet radio service (GPRS) Support Node (SGSN). According to the technique, the first session management status message includes a transaction identifier identifying a packet data protocol context for a mobile device and including a cause value indicating that the packet data protocol context is to be suspended. Additionally, the technique includes, in response to the first session management status message, instructing the radio network controller to suspend transfer of data related to the identified packet data protocol context.

The example technique may further involve after instructing the radio network controller to suspend transfer of user data, receiving a second session management status message at the SGSN, the second session management status message including the transaction identifier identifying the packet data protocol context for the mobile device and including a cause value indicating that the packet data protocol context is to be resumed and, in response to the second session management status message, instructing the radio network controller to resume transfer of user data for the identified packet data protocol context. In some implementations, the transaction identifier identifies a list of packet data protocol contexts to be suspended. Additionally, the technique may further include, in response to receiving the first session management status message, initiating buffering of packet switched data in a buffer at the SGSN.

Furthermore, the technique may involve, in response to receiving the first session management status message, initiating buffering of packet switched data in a buffer at the SGSN and, in response to receiving the second session management status message, transmitting the contents of the buffer to the mobile device. In some implementations of the technique the packet data protocol context is a first packet data protocol context and the technique further involves receiving a second session management status message including a transaction identifier identifying a second packet data protocol context for the mobile device and including the cause value indicating that the second packet data protocol context is to be suspended and, in response to the second session management status message, suspending transfer of user data for the identified packet data protocol context.

A fourth example technique disclosed herein involves generating a first session management status message including a transaction identifier identifying a packet data protocol context associated with a packet switched service connection for a mobile device and including a cause value indicating that the packet data protocol context is to be suspended. The technique further involves transmitting the first session management status message. In some implementations, transmitting the first session management status message is accomplished by transmitting the first session management status message from a component of the mobile communication network to the mobile device. In some implementations, the component of the mobile communication network may be a serving general packet radio service support node. While in other implementations, the component of the mobile communication network may be a gateway to a core network of the mobile communication network.

In some implementations of the describe technique, transmitting the first session management status message is accomplished by transmitting the first session management status message from the mobile device to a component of the mobile communication network.

In some implementations, the technique further includes after transmitting the first session management status message, generating a second session management status message including the transaction identifier identifying the packet data protocol context associated with the packet switched service connection for the mobile device and including a cause value indicating that the packet data protocol context is to be resumed and transmitting the first session management status message. According to some example implementations, the first session management status message is generated and transmitted by a gateway of the core network of the mobile communication network and the second session management status message is generated and transmitted by the mobile device. Furthermore, in some implementation, generating the first session management status message is performed in response to a determination that data services are to be scheduled. Additionally, in some implementations generating the first session management status message is performed in response to determining that the mobile device is experiencing resource constraints. Additionally, in some implementations generating the first session management status message is performed in response to determining that the mobile network is experiencing resource constraints.

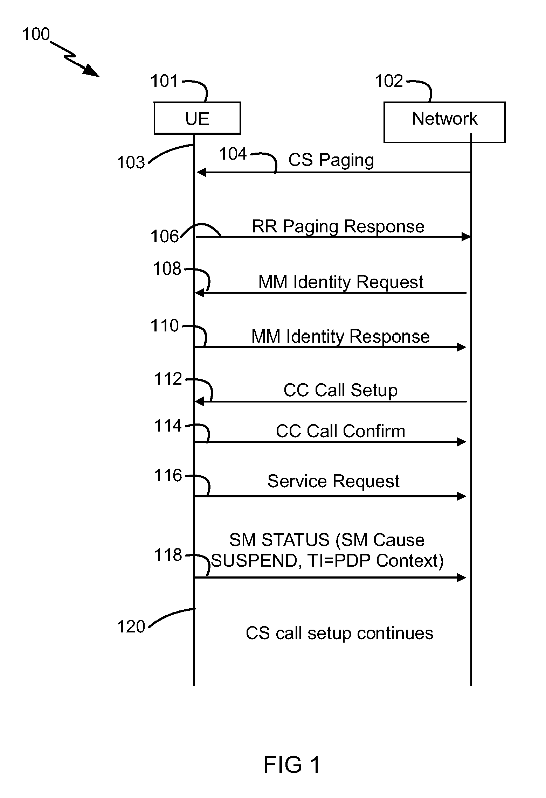

FIG. 1 illustrates an example message flow 100 between user equipment (UE) 101 network 102, each of which is implemented according to this disclosure. At state 103, the UE 101 has previously established communications with the network 102, established a packet data protocol (PDP) connection with the network, and may be in any radio resource control (RRC) state. The example message flow 100 begins when a circuit switched (CS) Paging message 104 is sent by the network 102 and received by the UE 101. The CS Paging message 104 is a notification of an incoming call (e.g., a voice call) for the UE 101 and causes the UE 101 to initiate the process of receiving the call. In response to the CS Paging message 104, the UE 101 sends a radio resource (RR) paging response 106 to the network 102. The network 102 then sends a mobility management (MM) identity request 108 to retrieve identity information from the UE 101. In response, the UE 101 provides identity information to the network 102 in an MM identity response 110. The network 102 then sends a call control (CC) call setup 112 to the UE 101 to establish the CS call and the UE 101 responds with a CC call confirm message 114. The UE 101 may additionally send a service request message 116 when the UE 101 is not in a packet mobility management (PMM) connected state.

While the foregoing describes an example message flow 100 that may be used to initiate a call between a network 102 and UE 101, any message flow may be used, one or more messages may be removed, and/or one or more additional messages may be added. Furthermore, a message flow may alternatively establish a call initiated by the UE 101.

According to the illustrated example, as described in detail herein, after the call has been confirmed between the UE 101 and the network 102, the UE 101 sends a session management (SM) status message 118 to suspend PS services for the UE 101. Suspending PS services causes the network 102 to buffer data to be sent to the UE 101 via PS services when they resume and to prevent the initiation of new packet data protocol (PDP) contexts (e.g., PS communications) without deactivating or disconnecting the PDP contexts. Because the PDP contexts are not deactivated, background authentication and subscription validation do not need to be performed at the network 102 when the PDP contexts are resumed. The SM status message 118 of the illustrated example includes two parameters: Cause Code and Transaction ID set.

The Cause Code indicates the purpose of the SM status message 118. According to the illustrated example, cause code 113 is defined to be a SUSPEND PDP CONTEXT indication. Alternatively, any other defined or undefined code could be used to signal suspension of the PDP context by the network 102. For example, code 26 Insufficient Resources or code 34 Service Option Temporarily Out Of Order could be used. Any code that the network 102 will recognize as a request to suspend PS services to the UE 101 may be used.

The Transaction ID set for the SM status message 118 identifies the PDP context that is to be suspended. According to the illustrated example, the UE 101 sends one message for each PDP context that is to be suspended. Alternatively, the Transaction ID set could identify multiple PDP contexts or may be an indication that all open PDP contexts should be suspended.

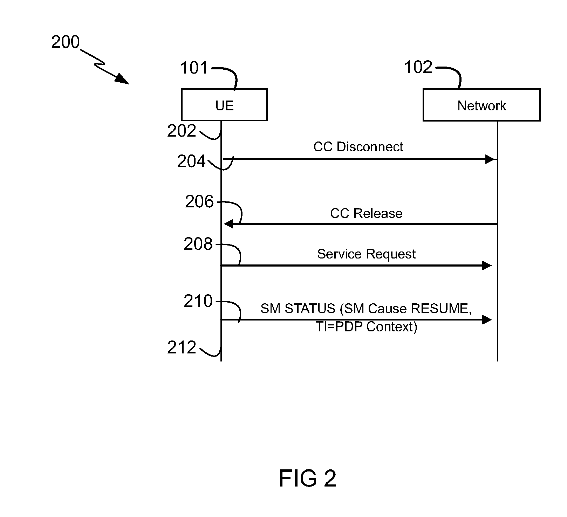

At state 120, all PDP contexts have been suspended and, therefore, all PS traffic is suspended, and CS call setup continues. As will be described in further detail in conjunction with FIG. 2, the PDP contexts are suspended until the call releases. Suspending PS traffic prevents the processing of the PS traffic by the network 102 from interfering with the processing of CS traffic.

According to the foregoing example, the SM Status message to suspend PS services is sent automatically when a call is initiated, whether that initiation is from the UE 101 or the network 102. However, as described in further detail herein, the SM Status message may be sent at any time. For example, the UE 101 may send the SM Status message after the UE 101 determines that a conflict between CS data and PS data processing may occur at the network 102.

In some communication network implementations (e.g., Long Term Evolution (LTE), all traffic may be PS traffic. Accordingly, the suspension of some or all PS services will not be based on CS traffic. In such implementations, some or all PS services may be suspended based on the UE 101 establishing a scheduling priority for PS services, the network 102 establishing a scheduling priority for PS services, etc. For example, where a UE 101 determines that a first PS session is of higher priority than a second PS session, the UE 101 could explicitly suspend the second (and other) PS sessions to allow the first PS session to be processed with priority.

While the example message flow 100 of FIG. 1 and additional embodiments described herein describe the SM status message as being sent from a UE (e.g., the UE 101 to a network (e.g., the network 102), it should be understood that SM status messages may be sent from the network to the UE. Additionally, it should be understood that determinations of when to send SM status messages described as being made the UE may be made at the network. For example, SGSN of the network may decide that a call has been initiated, signal strength for the UE has diminished, network congestion will prevent reliable parallel processing of CS and PS data, etc. and send a SM status message to the UE to suspend PS services. Furthermore, while several embodiments in this disclosure describe the UE as sending an SM status message to suspend PS services followed by a SM status message to resume PS services, it should be understood that different devices may send each of the messages. For example, a suspend SM status message may be issued by a UE followed by a network element issuing a resume SM status message. In other words, the determinations to suspend and resume PS services may be made at both the network and UE and such determinations may be processed in parallel such that each component can request suspension and resumption of PS services when each component determines that such action is appropriate.

FIG. 2 illustrates an example message flow 200 between the UE 101 and the network 102 implemented according to this disclosure to resume PS services after they are suspended by, for example, the message flow of FIG. 1. At state 202, the UE 101 has previously established an active call with the network 102 and has previously suspended all PDP contexts. This suspension may be carried out as described in conjunction with FIG. 1, or according to any other procedure. The example message flow 200 begins when the UE 101 sends a CC disconnect message 204 to the network 102 to terminate the active CS call. The network 102 confirms the disconnection request by sending a CC release message 206 to the UE 101. The UE 101 may additionally send a service request message 208 when the UE 101 is not in a packet mobility management (PMM) connected state.

While the foregoing describes an example message flow 200 that may be used to terminate a call between the network 102 and the UE 101, any message flow may be used, one or more messages may be removed, and/or one or more additional messages may be added. Furthermore, the network 102 may initiate the call termination.

After the active call is terminated via messages 204-208, the UE 101 sends a SM status message 210 to the network 102 to resume PDP contexts and their attendant data flows. Like the suspend SM status message 118, the SM status message 210 may included any Cause Code that the network 102 will recognize as a request to resume PDP contexts. According to the illustrated example, Cause Code 114 is used as a RESUME PDP CONTEXT message. Alternatively, any other code may be used. Also, like the suspend SM status message 118, the SM status message 210 includes a Transaction ID identifying the PDP context(s) to be resumed. One SM status message 210 is sent for each PDP context to be resumed. Alternatively, the Transaction ID set may identify multiple PDP contexts or may include an indication that all PDP contexts should be resumed. At state 212 the PDP context is resumed and active PS communication resumes.

According to the example message flow 200, the SM status message 210 to resume PDP contexts is sent in response to a call disconnection when a call is disconnected. However, the SM status message 210 may be sent at any time. For example, the SM status message 210 may be sent after a determination is made that PS communications will not interfere with CS communications. For example, after a determination that call fading is not occurring, after a determination that a received signal strength indication reading exceeds a threshold, etc.

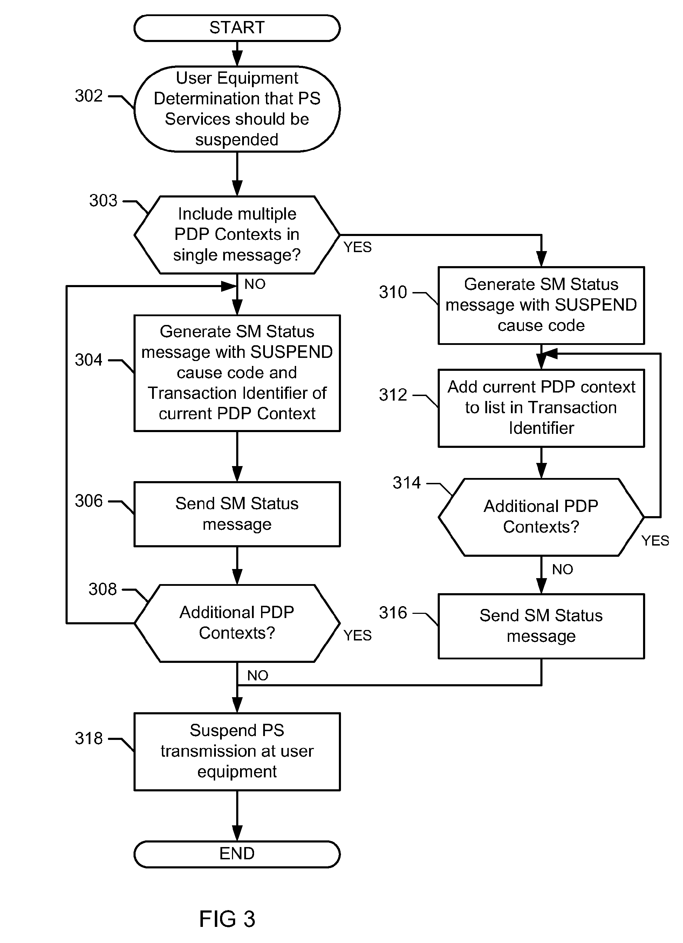

Flowcharts representative of example processes that may be executed to implement some or all of the elements of the mobile communications system and mobile communication devices described herein are shown in FIGS. 3-7.

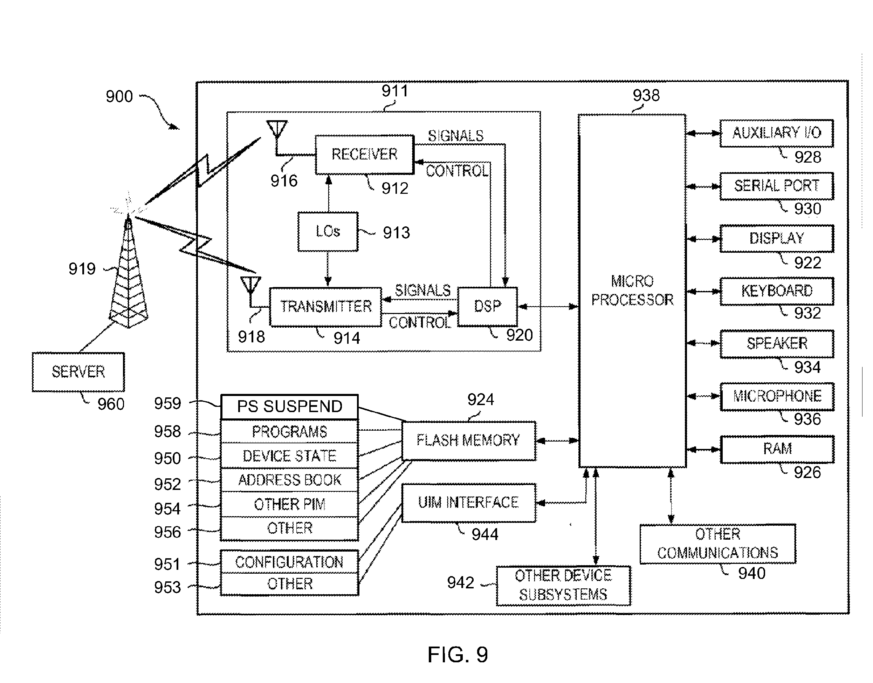

In these examples, the process represented by each flowchart may be implemented by one or more programs comprising machine readable instructions for execution by: (a) a processor, such as the microprocessor 938 shown in the example UE 900 discussed below in connection with FIG. 9, (b) a controller, and/or (c) any other suitable device. The one or more programs may be embodied in software stored on a tangible medium such as, for example, a flash memory, a CD-ROM, a floppy disk, a hard drive, a DVD, or a memory associated with the processor 612, but the entire program or programs and/or portions thereof could alternatively be executed by a device other than the microprocessor 1100 and/or embodied in firmware or dedicated hardware (e.g., implemented by an application specific integrated circuit (ASIC), a programmable logic device (PLD), a field programmable logic device (FPLD), discrete logic, etc.). For example, any one, some or all of the example mobile communications system components could be implemented by any combination of software, hardware, and/or firmware. Also, some or all of the processes represented by the flowcharts of FIGS. 3-7 may be implemented manually.

Further, although the example processes are described with reference to the flowcharts illustrated in FIGS. 3-7, many other techniques for implementing the example methods and apparatus described herein may alternatively be used. For example, with reference to the flowcharts illustrated in FIGS. 3-7, the order of execution of the blocks may be changed, and/or some of the blocks described may be changed, eliminated, combined and/or subdivided into multiple blocks.

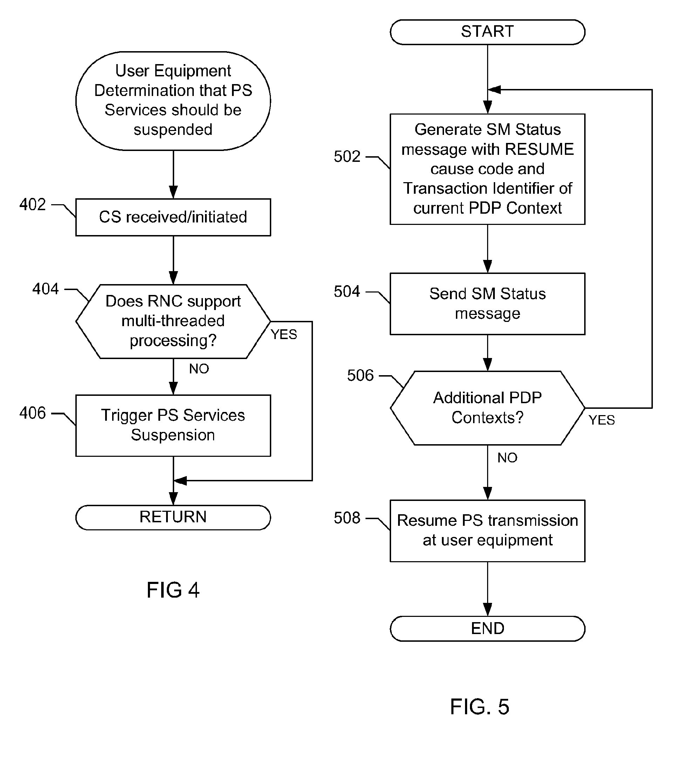

FIG. 3 is a flowchart of an example process that may be implemented by UE to suspend PS services. The example flowchart of FIG. 3 begins when the UE (e.g., the UE 101 of FIG. 1) determines that PS services should be suspended (block 302). The UE may use any procedure for determining that PS service should be suspended. The UE may use procedures to predict when a conflict between CS services and PS services may occur. For example, the UE may measure signal strength during a CS call to determine that a handover may be needed or a frequency change may need to occur and, in response to the determination, may determine that PS services should be suspended. Another example process for determining that PS services should be suspended is described in conjunction with FIG. 4.

After the UE determines that PS services should be suspended (block 302), The UE determines if multiple PDP contexts should be identified in a single SM status message (block 303). For example, the SM status message of the illustrated example includes a Transaction ID set that may identify a single PDP context or may identify a list, a set, an array, etc. of PDP contexts. When the SM status message is to include multiple PDP contexts, control proceeds to block 310, which is described below. Of course, in implementations where a single PDP context is always included in an SM status message or multiple PDP contexts are always included in an SM status message, block 303 may be eliminated and control would proceed directly to the appropriate blocks following block 302. When the SM status message is not to include multiple PDP contexts, the UE generates an SM status message with the suspend cause code and transaction identifier of the first PDP context (block 304). The UE then sends the SM status message to the communications network (306). The UE then determines if additional PDP contexts exist (block 308). When additional PDP contexts exist, control returns to block 304 to generate and send an SM status message for the remaining PDP contexts.

When no additional PDP contexts exist (block 308), the UE suspends PS data services at the UE (block 318). For example, the UE may buffer all active data communications and may prevent applications for initiating new PDP contexts.

Returning to block 310, after determining that the SM status message is to identify multiple PDP contexts (block 303), the UE generates an SM status message that includes the suspend cause code as previously described (block 310). The UE then adds the current PDP context to the Transaction ID set (block 312). Next, the UE determines if additional PDP contexts exist (block 314). When additional PDP contexts exist, control returns to block 312 to add identifiers for the additional PDP contexts to the Transaction ID set. Accordingly, the UE will create a list of active PDP contexts in the Transaction ID set so that a single SM status message can be sent to suspend all of the PDP contexts. Sending a single SM status message will reduce the usage of the mobile communications path.

When no additional PDP contexts exist (block 314), the UE sends the SM status message to the communications network (block 316). Finally, as previously described, the UE suspends PS data services at the UE (block 318).

FIG. 4 is a flowchart of an example process that may be implemented by UE to determine that PS services should be suspended. The example process begins when a call setup is received from a communications network at the UE or a call setup is initiated by the UE (block 402). The UE then determines if the radio network controller (RNC) for the communications network connected to the UE supports multi-threaded processing (rather than serial processing) and/or supports reliable parallel support for CS services and PS services so that the processing of PS messages will not interfere with the processing of CS messages. For example, the communications network may cause an indication of the capabilities of the RNC to be broadcast on the network and received by the UE. When the RNC supports multi-threaded processing, the process ends without triggering suspension of PS services. Alternatively, in block 404 any other determination for indicating that PS services should be suspended may be made. For example, the UE may make a determination based on network loading information. In another implementation, the UE may monitor response delay times from the RNC and determine that suspension of PS services should be triggered when response times exceed a threshold or responses times are increasing at a rate that exceeds a threshold.

When it is determined that the RNC does not support multi-threaded processing and/or reliable parallel processing of CS services and PS services (block 404), the UE triggers the suspension of PS services (block 406).

FIG. 4 is one example of a process that may be used for determining when to suspend PS services and any other process may be used. For example, the UE may suspend PS services anytime a CS call setup occurs.

FIG. 5 is a flowchart of an example process for UE to resume PS services. For example, the flowchart of FIG. 5 may be implemented to resume PS services suspended by the process of FIG. 3. The UE may perform the process steps of FIG. 5 anytime it is determined that PS services should be resumed. For example, the UE may resume the PS services after it is determined that the processing of PS messages will not interfere with the processing of CS messages. The process of FIG. 5 begins when the UE generates an SM status message with a resume cause code and transaction identifier of the first PDP context (block 502). The UE then sends the SM status message to the communications network (block 504).

The UE then determines if additional PDP contexts exist (block 506). When additional PDP contexts exist, control returns to block 502 to generate and send an SM status message for the remaining PDP contexts.

When no additional PDP contexts exist (block 506), the UE resumes PS data services at the UE (block 508). For example, the UE may send all buffered data communications and may allow applications to initiate new PDP contexts. If any communications timed out due to the duration of the buffering, the UE or an application installed thereon may need to reestablish the communications.

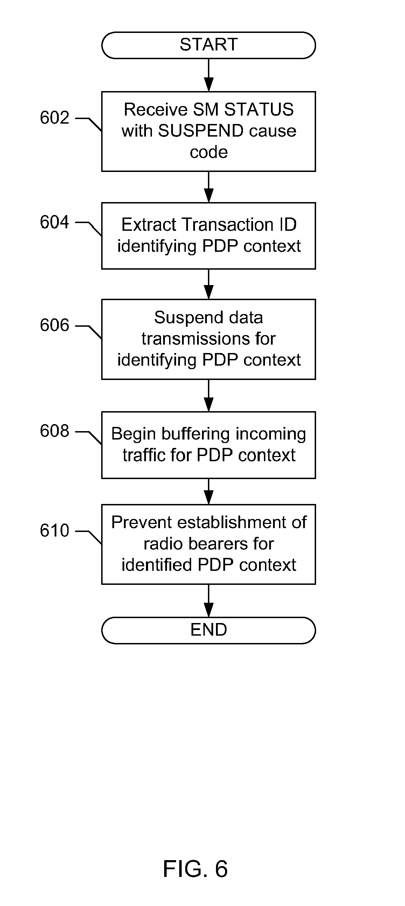

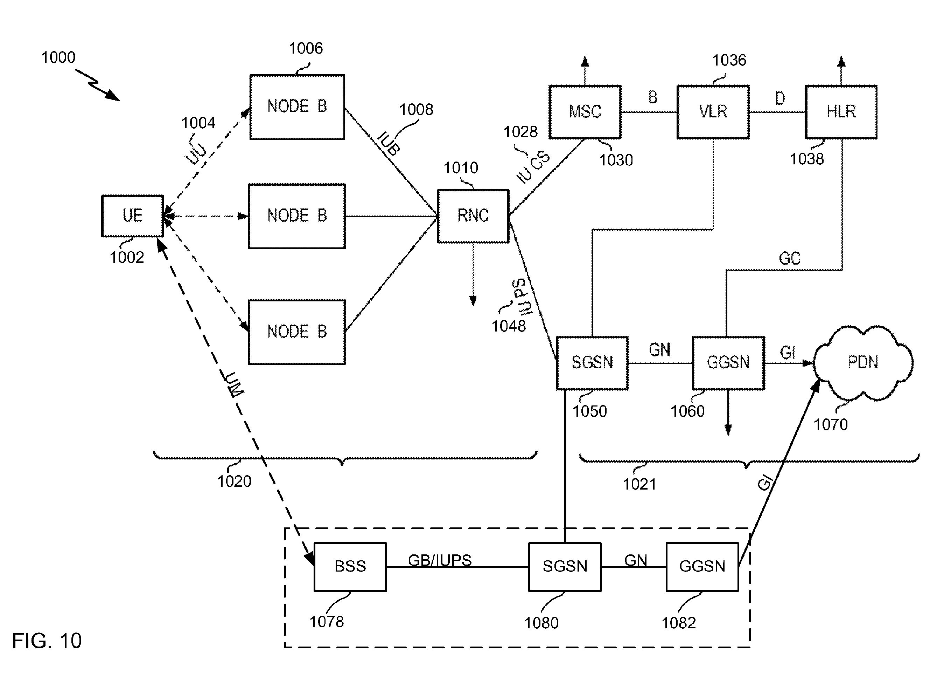

FIG. 6 is a flowchart of an example process that may be implemented by a communications network (e.g., the network 102 of FIG. 1) to receive and process PS service suspend requests from a UE. The process of FIG. 6 may be implemented by, for example, a serving GPRS support node (SGSN) of a network such as the network described in conjunction with FIG. 10. Accordingly, by way of example, the following description refers to such an implementation. Alternatively, any other component of a communications network may implement one or more of the steps.

The example process of FIG. 6 begins when the SGSN receives an SM status message with a Cause Code indicating that a UE is requesting PS services to be suspended (block 602). The SGSN then extracts the Transaction ID set that identifies the PDP context to be suspended from the SM status message (block 604). As previously described, the Transaction ID set may identify a set of PDP contexts to identify multiple PDP contexts or indicate that all active PDP contexts for the UE should be suspended. The SGSN then causes the identified PDP context to be suspended (block 606). For example, the SGSN may buffer data for the PDP context(s) to be suspended. Alternatively, the SGSN may discard data retrieved while the PDP context is suspended and rely on other protocol layers to receover any lost data is needed. In another alternative, the SGSN may instruct a RNC for the communications network to initiate a suspend of a radio link control (RLC) entity associated with the PDP context by issuing the CRLC-SUSPEND-Req primitive in accordance with 3GPP TS 25.322. Similarly, a suspend function is executed on the link between the SGSN and a gateway GPRS support node (GGSN) for the identified PDP context(s). Alternatively, any other procedure for suspending the PDP context may be used.

After suspending the PDP context, the SGSN causes data for the PDP context that was suspended to be buffered until a request to resume the PDP context is received (block 608). The SGSN then prevents the establishment of radio bearers for the identified PDP context.

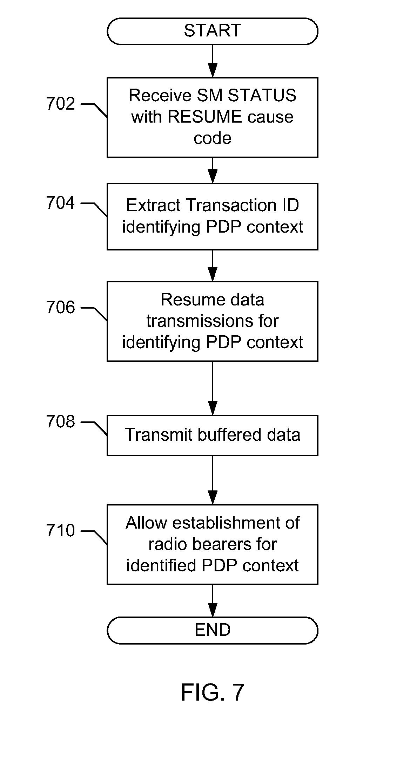

The SGSN keeps the PDP contexts suspended until a resume message is received. Turning to FIG. 7, an example process for resuming PDP contexts is illustrated by the example flowchart. The example process begins when the SGSN receives an SM status message with a resume cause code (block 702). The SGSN extracts the Transaction ID set that identifies the PDP context to be resumed from the SM status message (block 704). The SGSN then resumes the suspended PDP context (block 706). For example, the SGSN may allow transmission of buffered data and new data for the PDP context or contexts that were suspended. Alternatively, the SGSN may instruct a RNC for the communications network to initiate a resume of a radio link control (RLC) entity associated with the PDP context by issuing the CRLC-RESUME-Req primitive in accordance with 3GPP TS 25.322. Alternatively, any other procedure for suspending the PDP context may be used.

After resuming the PDP context (block 706), the SGSN transmits any buffered data to the UE (block 708). The SGSN also allows establishment of radio bearers for the PDP context (block 710).

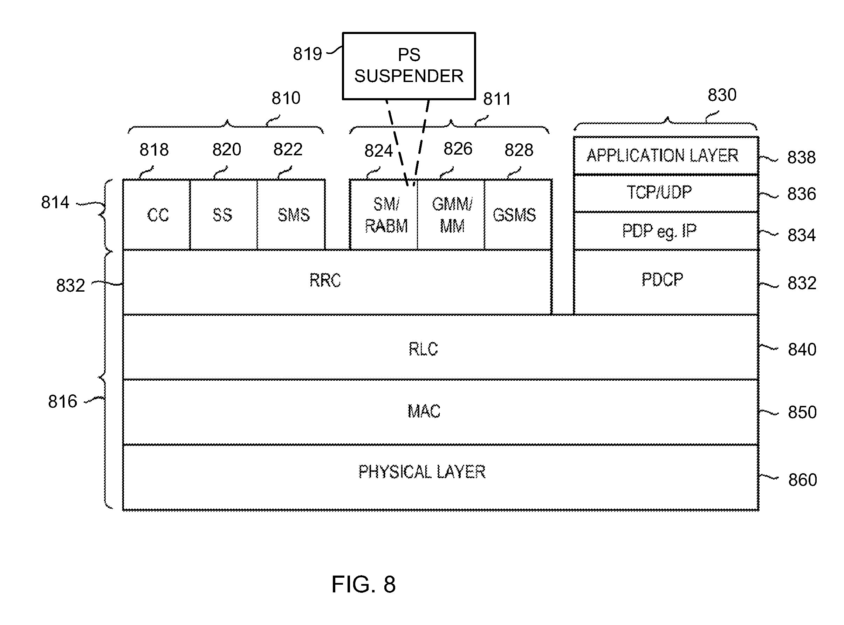

FIG. 8 illustrates a protocol stack for a UMTS network implemented in accordance with this disclosure. As seen in FIG. 8, the UMTS includes a CS control plane 810, PS control plane 811, and PS user plane 830. Within these three planes, a non-access stratum (NAS) portion 814 and an access stratum portion 816 exist.

A NAS portion 814 in CS control plane 810 includes a call control (CC) 818, supplementary services (SS) 820, and short message service (SMS) 822. A NAS portion 814 in PS control plane 811 includes both mobility management (MM) and GPRS mobility management (GMM) 826. It further includes SM/RABM 824 and GSMS 828.

The CC 818 provides for call management signaling for circuit switched services. The session management portion of SM/RABM 824 provides for PDP context activation, deactivation and modification and quality of service negotiation. In addition, the SM/RABM 824 includes a PS Suspender service 819. The PS Suspender service 819 provides for PDP context suspension and resumption notifications to be sent from a UE to a communications network. For example, as described herein, SM Status messages indicating that PDP contexts should be suspended or resumed are sent via the PS Suspender service in the SM/RABM 824 from the UE to the network.

The main function of the RABM portion of the SM/RABM 824 is to connect a PDP context to a Radio Access Bearer. Thus SM/RABM 824 is responsible for the setup, modification and release of radio bearers.

CS control plane 810 and PS control plane 811, in the access stratum 816 sit on radio resource control (RRC) 817. NAS portion 814 in PS user plane 830 includes an application layer 838, TCP/UDP layer 836, and PDP layer 834. PDP layer 834 can, for example, include internet protocol (IP). Access Stratum 816, in PS user plane 830 includes packet data convergence protocol (PDCP) 832. PDCP 832 is designed to make the WCDMA protocol suitable to carry TCP/IP protocol between UE and RNC (as seen in FIG. 10), and is optionally for IP traffic stream protocol header compression and decompression.

The UMTS Radio Link Control (RLC) 840 and Medium Access Control (MAC) layers 850 form the data link sub-layers of the UMTS radio interface and reside on the RNC node and the User Equipment. The Layer 1 (L1) UMTS layer (physical layer 850) is below the RLC/MAC layers 840 and 850. This layer is the physical layer for communications.

While the above can be implemented on a variety of mobile devices, an example of one mobile device is outlined below with respect to FIG. 9.

FIG. 9 is an exemplary UE that can be implemented in accordance with this disclosure. UE 900 is preferably a two-way wireless communication device having at least voice and data communication capabilities. UE 900 preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where UE 900 is enabled for two-way communication, it will incorporate a communication subsystem 911, including both a receiver 912 and a transmitter 914, as well as associated components such as one or more, preferably embedded or internal, antenna elements 916 and 918, local oscillators (LOs) 913, and a processing module such as a digital signal processor (DSP) 920. As will be apparent to those skilled in the field of communications, the particular design of the communication subsystem 911 will be dependent upon the communication network in which the device is intended to operate. For example, UE 900 may include a communication subsystem 911 designed to operate within the GPRS network and/or UMTS network.

Network access requirements will also vary depending upon the type of network 919. For example, In UMTS and GPRS networks, network access is associated with a subscriber or user of UE 900. For example, a GPRS mobile device therefore requires a subscriber identity module (SIM) card in order to operate on a GPRS network. In UMTS a USIM or SIM module is required. In CDMA a RUIM card or module is required. These will be referred to as a UIM interface herein. Without a valid UIM interface, a mobile device may not be fully functional. Local or non-network communication functions, as well as legally required functions (if any) such as emergency calling, may be available, but mobile device 900 will be unable to carry out any other functions involving communications over the network 900. The UIM interface 944 is normally similar to a card-slot into which a card can be inserted and ejected like a diskette or PCMCIA card. The UIM card can have approximately 64K of memory and hold many key configuration 951, and other information 953 such as identification, and subscriber related information.

When required network registration or activation procedures have been completed, UE 900 may send and receive communication signals over the network 919. Signals received by antenna 916 through communication network 919 are input to receiver 912, which may perform such common receiver functions as signal amplification, frequency down conversion, filtering, channel selection and the like, and in the example system shown in FIG. 7, analog to digital (A/D) conversion. A/D conversion of a received signal allows more complex communication functions such as demodulation and decoding to be performed in the DSP 920. In a similar manner, signals to be transmitted are processed, including modulation and encoding for example, by DSP 920 and input to transmitter 914 for digital to analog conversion, frequency up conversion, filtering, amplification and transmission over the communication network 919 via antenna 918. DSP 920 not only processes communication signals, but also provides for receiver and transmitter control. For example, the gains applied to communication signals in receiver 912 and transmitter 914 may be adaptively controlled through automatic gain control algorithms implemented in DSP 920.

Network 919 may further communicate with multiple systems, including a server 960 and other elements (not shown). For example, network 919 may communicate with both an enterprise system and a web client system in order to accommodate various clients with various service levels.

UE 900 preferably includes a microprocessor 938 which controls the overall operation of the device. Communication functions, including at least data communications, are performed through communication subsystem 911. Microprocessor 938 also interacts with further device subsystems such as the display 922, flash memory 924, random access memory (RAM) 926, auxiliary input/output (I/O) subsystems 928, serial port 930, keyboard 932, speaker 934, microphone 936, a short-range communications subsystem 940 and any other device subsystems generally designated as 942.

Some of the subsystems shown in FIG. 9 perform communication-related functions, whereas other subsystems may provide "resident" or on-device functions. Notably, some subsystems, such as keyboard 932 and display 922, for example, may be used for both communication-related functions, such as entering a text message for transmission over a communication network, and device-resident functions such as a calculator or task list.

Operating system software used by the microprocessor 938 is preferably stored in a persistent store such as flash memory 924, which may instead be a read-only memory (ROM) or similar storage element (not shown). Those skilled in the art will appreciate that the operating system, specific device applications, or parts thereof, may be temporarily loaded into a volatile memory such as RAM 926. Received communication signals may also be stored in RAM 926. Further, a unique identifier is also preferably stored in read-only memory.

As shown, flash memory 924 can be segregated into different areas for both computer programs 958 and program data storage 950, 952, 954 and 956. These different storage types indicate that each program can allocate a portion of flash memory 924 for their own data storage requirements. The flash memory 924 additionally includes a PS suspend module 959 to provide for suspension and resumption of PDP contexts. The PS suspend module 959 instructs the microprocessor 938 to generate and cause to be sent SM status messages that instruct a connected communications network to suspend PS services and buffer communications until a SM status message is sent requesting resumption.

Microprocessor 938, in addition to its operating system functions, preferably enables execution of software applications on the mobile device. A predetermined set of applications that control basic operations, including at least data and voice communication applications for example, will normally be installed on UE 900 during manufacturing. A preferred software application may be a personal information manager (PIM) application having the ability to organize and manage data items relating to the user of the mobile device such as, but not limited to, e-mail, calendar events, voice mails, appointments, and task items. Naturally, one or more memory stores would be available on the mobile device to facilitate storage of PIM data items. Such PIM application would preferably have the ability to send and receive data items, via the wireless network 919. In a preferred embodiment, the PIM data items are seamlessly integrated, synchronized and updated, via the wireless network 919, with the mobile device user's corresponding data items stored or associated with a host computer system. Further applications may also be loaded onto the mobile device 900 through the network 919, an auxiliary I/O subsystem 928, serial port 930, short-range communications subsystem 940 or any other suitable subsystem 942, and installed by a user in the RAM 926 or preferably a non-volatile store (not shown) for execution by the microprocessor 938. Such flexibility in application installation increases the functionality of the device and may provide enhanced on-device functions, communication-related functions, or both. For example, secure communication applications may enable electronic commerce functions and other such financial transactions to be performed using the UE 900. These applications will however, according to the above, in many cases need to be approved by a carrier.

In a data communication mode, a received signal such as a text message or web page download will be processed by the communication subsystem 911 and input to the microprocessor 938, which preferably further processes the received signal for output to the display 922, or alternatively to an auxiliary I/O device 928. A user of UE 900 may also compose data items such as email messages for example, using the keyboard 932, which is preferably a complete alphanumeric keyboard or telephone-type keypad, in conjunction with the display 922 and possibly an auxiliary I/O device 928. Such composed items may then be transmitted over a communication network through the communication subsystem 911.

For voice communications, overall operation of UE 900 is similar, except that received signals would preferably be output to a speaker 934 and signals for transmission would be generated by a microphone 936. Alternative voice or audio I/O subsystems, such as a voice message recording subsystem, may also be implemented on UE 900. Although voice or audio signal output is preferably accomplished primarily through the speaker 934, display 922 may also be used to provide an indication of the identity of a calling party, the duration of a voice call, or other voice call related information for example.

Serial port 930 in FIG. 9 would normally be implemented in a personal digital assistant (PDA)-type mobile device for which synchronization with a user's desktop computer (not shown) may be desirable. Such a port 930 would enable a user to set preferences through an external device or software application and would extend the capabilities of mobile device 900 by providing for information or software downloads to UE 900 other than through a wireless communication network. The alternate download path may for example be used to load an encryption key onto the device through a direct and thus reliable and trusted connection to thereby enable secure device communication.

Alternatively, serial port 930 could be used for other communications, and could include as a universal serial bus (USB) port. An interface is associated with serial port 930.

Other communications subsystems 940, such as a short-range communications subsystem, is a further optional component which may provide for communication between UE 900 and different systems or devices, which need not necessarily be similar devices. For example, the subsystem 940 may include an infrared device and associated circuits and components or a Bluetooth^{™} communication module to provide for communication with similarly enabled systems and devices.

FIG. 10 is a block diagram of a communication system 1000 which includes a UE 1002 which communicates through a wireless communication network.

UE 1002 communicates wirelessly with one of multiple Node Bs 1006. Each Node B 1006 is responsible for air interface processing and some radio resource management functions. Node B 1006 provides functionality similar to a Base Transceiver Station in a GSM/GPRS networks.

The wireless link shown in communication system 1000 of FIG. 10 represents one or more different channels, typically different radio frequency (RF) channels, and associated protocols used between the wireless network and UE 1002. A UU air interface 1004 is used between UE 1002 and Node B 1006.

An RF channel is a limited resource that must be conserved, typically due to limits in overall bandwidth and a limited battery power of UE 1002. Those skilled in art will appreciate that a wireless network in actual practice may include hundreds of cells depending upon desired overall expanse of network coverage. All pertinent components may be connected by multiple switches and routers (not shown), controlled by multiple network controllers.

Each Node B 1006 communicates with a radio network controller (RNC) 1010. The RNC 1010 is responsible for control of the radio resources in its area. One RNC 1010 control multiple Node Bs 1006.

The RNC 1010 in UMTS networks provides functions equivalent to the Base Station Controller (BSC) functions in GSM/GPRS networks. However, an RNC 1010 includes more intelligence including, for example, autonomous handovers management without involving MSCs and SGSNs.

The interface used between Node B 1006 and RNC 1010 is an IUB interface 1008. An NBAP (Node B application part) signaling protocol is primarily used, as set forth in 3GPP TS 25.433.

Universal Terrestrial Radio Access Network (UTRAN) 1020 comprises the RNC 1010, Node B 1006 and the UU air interface 1004.

Circuit switched traffic is routed to Mobile Switching Centre (MSC) 1030. MSC 1030 is the computer that places the calls, and takes and receives data from the subscriber or from PSTN (not shown).

Traffic between RNC 1010 and MSC 1030 uses the IU-CS interface 1028. IU-CS interface 828 is the circuit-switched connection for carrying (typically) voice traffic and signaling between UTRAN 1020 and the core voice network. The main signaling protocol used is RANAP (Radio Access Network Application Part). The RANAP protocol is used in UMTS signaling between the Core Network 1021, which can be a MSC 1030 or SGSN 1050 (defined in more detail below) and UTRAN 820. RANAP protocol is set forth in 3GPP TS 25.413 and 3GPP TS 25.413.

For all UEs 1002 registered with a network operator, permanent data (such as UE 1002 user's profile) as well as temporary data (such as UE's 1002 current location) are stored in a home location registry (HLR) 1038. In case of a voice call to UE 1002, HLR 1038 is queried to determine the current location of UE 1002. A Visitor Location Register (VLR) 1036 of MSC 1030 is responsible for a group of location areas and stores the data of those mobile stations that are currently in its area of responsibility. This includes parts of the permanent mobile station data that have been transmitted from HLR 1038 to the VLR 1036 for faster access. However, the VLR 1036 of MSC 1030 may also assign and store local data, such as temporary identifications. UE 1002 is also authenticated on system access by HLR 1038.

Packet data is routed through Service GPRS Support Node (SGSN) 1050. SGSN 1050 is the gateway between the RNC and the core network in a GPRS/UMTS network and is responsible for the delivery of data packets from and to the UEs within its geographical service area. IU-PS interface 1048 is used between the RNC 1010 and SGSN 1050, and is the packet-switched connection for carrying (typically) data traffic and signaling between the UTRAN 1020 and the core data network. The main signaling protocol used is RANAP (described above).

The SGSN 1050 communicates with the Gateway GPRS Support Node (GGSN) 1060. GGSN 1060 is the interface between the UMTS/GPRS network and other networks such as the Internet or private networks. GGSN 1060 is connected to a public data network PDN 1070 over a GI interface.

As described in conjunction with FIGS. 6-7, in accordance with the illustrated embodiment, SM status messages for suspending and resuming PDP contexts are received and processed by the SGSN 1050. In an example implementation, the SGSN 1050 instructs the RNC 1010 to cause the suspension of PDP contexts in response to receipt of a suspend SM status message and to cause the resumption of PDP contexts in response to receipt of a resume SM status message.

A second SGSN 1080 is included in the block diagram of FIG. 10. The second SGSN 1080 is a part of a second communication system (e.g., a second generation (2G) communication system, a third generation (3G) communication system, etc.) that may be communicatively coupled to the core network 1021 and may provide services to the UE 1002. For example, the UE 1002 may initiate a communication session (e.g., a phone call) while connected to the UTRAN 1020 and the communication session may be handed over to the communication network associated with the second SGSN 1080 (e.g., due to call quality fading, movement of the UE into the coverage area of the communication network, etc.). The example second communication network includes (among other components that are not illustrated) a base station subsystem 1078 that may be communicatively coupled to the UE 1002 via a UM interface and is communicatively coupled to the SGSN 1080 via a GB/IUPS interface. The example second communication network additionally includes a second GGSN that communicates with the second SGSN 1080 over a GN interface and communicates with the PDN 1070 or a GI interface. While particular components of the second SGSN 1080 are illustrated, the second SGSN 1080 and associated communication network may be implemented by any communication network communicatively coupled with the core network 1021.

When one or more PDP contexts were suspended by the SGSN 1050 and a handover occurs from the core network 1021 to the communication network associated with the second SGSN 1080, the SGSN 1050 transfers PS session information to the second SGSN 1080. For example, the information may be transmitted using a GPRS tunneling protocol (GTP) tunnel.

Where the second SGSN 1080 supports Dual Transfer Mode (DTM) in accordance with 3GPP TS 42.055 or is accessed through generic access networks (GAN) like WiFi wireless local area network (WLAN), the suspension and resumption of the PDP contexts will be handled by standard DTM procedures because PS services are always suspended during CS sessions. If a PS service is not automatically resumed when a CS session is completed, the UE may resume the PS session by sending a Routing Area Update request.

Where the second SGSN 1080 does not support DTM, the SGSN 1050 will transmit a flag to the second SGSN 1080 during the handover to instruct the second SGSN 1080 to suspend the PS services. The UE will later transmit a SM status resume message that will be handled as described herein by the second SGSN 1080.

Finally, although certain example methods, apparatus and articles of manufacture have been described herein, the scope of coverage of this disclosure is not limited thereto. On the contrary, this disclosure covers all methods, apparatus and articles of manufacture fairly falling within the scope of the appended claims either literally or under the doctrine of equivalents.

## Claims

1. A method in a user equipment (101), the method comprising:
sending a first session management status message (118) comprising a first indication indicating suspend packet data protocol context.

2. The method of claim 1, wherein the first indication indicates that all packet data protocol contexts are to be suspended.

3. The method of claim 1 or 2, wherein the first session management message (118) includes a transaction identifier associated with a first packet data protocol context to be suspended.

4. The method of claim 3, wherein the first session management message (118) includes a suspension indicator indicating that all active packet data protocol contexts sharing a packet data protocol address and an access point name with the first packet data protocol context shall be suspended.

5. The method of claim 3, wherein the first session management message (118) includes a suspension indicator indicating that only the first packet data protocol context shall be suspended.

6. The method of any of claims 1 to 5, wherein the first indication is a session management cause value.

7. The method of claim 6, wherein the session management cause value is #113 Suspend PDP context.

8. The method of any of claims 1 to 7, further comprising sending a second session management status message (210) comprising a second indication indicating resume packet data protocol context.

9. The method of claim 8, wherein the second indication indicates that all packet data protocol contexts are to be resumed.

10. The method of claim 8, wherein the second session management status message (210) includes a transaction identifier identifying a packet data protocol context to be resumed.

11. The method of claim 8, wherein the second indication is a session management cause value.

12. The method of claim 11, wherein the session management cause value is #114 Resume PDP context.

13. The method of any of claims 1 to 12, wherein the first session management status message (118) is sent when a circuit switch call is initiated.

14. The method of any of claims 1 to 13, wherein the first session management status message (118) is sent when the user equipment (101) determines that packet switched communications may interfere with circuit switched communications.

15. A method in a network equipment (102), the method comprising:
receiving a first session management status message (118) comprising a first indication indicating suspend packet data protocol context.

16. A user equipment comprising at least one component configured to perform any of the methods of claims 1-13.
